# EUROPÄISCHE PATENTSCHRIFT

(11) **EP 0 898 530 B1**
(45) Veröffentlichungstag und Bekanntmachung des Hinweises auf die Patenterteilung: **05.12.2001**
(21) Anmeldenummer: 97925929.8
(22) Anmeldetag: 20.05.1997
(51) Int. Cl.: B60T 7/10

(54) **FESTSTELLBREMSANLAGE**
PARKING BRAKE SYSTEM
SYSTEME DE FREIN DE STATIONNEMENT

(30) Priorität: 21.05.1996 DE 19620463; 15.05.1997 DE 19720422; 15.05.1997 DE 19720423
(43) Veröffentlichungstag der Anmeldung: 03.03.1999
(73) Patentinhaber: Bayerische Motoren Werke Aktiengesellschaft, 80788 München (DE)
(72) Erfinder: BOEDRICH, Harald, D-80637 München (DE); SIEPKER, Achim, D-80804 München (DE); NIKLAS, Johann, D-85778 Haimhausen (DE); ZIEBARTH, Thomas, D-80807 München (DE); REIS, Wolfgang, D-80798 München (DE); GUTT, Axel, D-80809 München (DE)
(86) Internationale Anmeldenummer: EP9702569
(87) Internationale Veröffentlichungsnummer: WO9744221

(56) Entgegenhaltungen:
- WO-A-95/27642
- DE-A- 4 129 934
- DE-A- 4 205 588
- DE-A- 19 517 485
- US-A- 5 178 237
- US-A- 5 417 624

## Beschreibung

Die Erfindung bezieht sich auf eine Feststellbremsanlage nach dem Oberbegriff des Anspruchs 1.

Aus der DE 41 29 934 C2 ist eine Feststellbremsanlage bekannt, bei der die Feststellbremse im Regelfall von einer motorisch betriebenen Stelleinheit betätigt wird. Die Stelleinheit treibt über eine Gewindespindel eine Spindelmutter an, die einen zweiarmigen Koppelhebel trägt. Über den ersten Hebelarm des Koppelhebels werden die Feststellbremsen des Fahrzeugs betätigt. Am zweiten Hebelarm greift über einen Seilzug eine muskelkraftbetriebene Notbetätigungseinrichtung an.

Aufgabe der Erfindung ist es, eine Ansteuerungseinrichtung für eine Feststellbremse zu schaffen, deren Fremd- und Notbetätigungseinrichtung so zusammenwirken, daß unabhängig von der vorangegangenen Betätigungsart (Fremdkraft bzw. Muskelkraft) aus jeder Position der Ansteuerungseinrichtung heraus ohne Einschränkung eine Betätigung der Feststellbremse sowohl durch Fremdkraft als auch durch Muskelkraft möglich ist.

Diese Aufgabe wird durch die Merkmale des Anspruchs 1 gelöst Kemgedanke ist es dabei, beide Einrichtungen über Zahnradgetriebe direkt auf die Gewindespindel wirken zu lassen. Durch die verwendeten Zahnradgetriebe ergibt sich ein einfacher und kompakter Aufbau bei gleichzeitig geringem Gewicht. Beide Zahnradgetriebe können in einem gemeinsamen Gehäuse angeordnet werden. Die Zahnradgetriebe können so ausgelegt und aufeinander abgestimmt werden, daß eine uneingeschränkte Betätigung sowohl durch Fremdkraft als auch durch Muskelkraft möglich ist.

Gemäß Anspruch 2 und 3 werden die Zahnradgetriebe von Not- und Fremdkraftbetätigungseinrichtung bevorzugt als Schneckengetriebe ausgelegt. Schneckengetriebe zeichnen sich durch ihren geringen Platzbedarf aus. Durch die sich kreuzenden Wellen von Schnecke und Schneckenrad ergeben sich Vorteile hinsichtlich der verschiedenen Möglichkeiten der Anordnung der einzelnen Komponenten der Ansteuerungseinrichtung, insbesondere der Notbetätigungseinrichtung, da von 90 ° abweichende Achswinkel S realisierbar sind.

Anspruch 4 beschreibt eine Alternative mit einem geradverzahnten Zahnrad der Notbetätigungseinrichtung, wodurch in einfacher Weise eine Verdrehung der Gewindespindel verhindert wird (siehe Ansprüche 5 bis 7).

Selbstverständlich können auch andere Zahnradgetriebe (z. B. Kegelradgetriebe, Stimradgetriebe usw.) zum Einsatz kommen, je nach Belastung, Übersetzung, Lage der Wellen, etc.

Gemäß Anspruch 5 wird für den Regelfall der Fremdkraftbetätigung die verdrehgesicherte Gewindespindel in axialer Richtung durch das von der Stelleinheit angetriebene Schneckenrad hindurchgeschoben. Diese reine Linearbewegung wird in eine Verstellbewegung an der Feststellbremse umgesetzt.

Gemäß der vorteilhaften Weiterbildung der Erfindung nach Anspruch 6 wird für den Regelfall der Fremdkraftbetätigung das Zahnradgetriebe der Notbetätigungseinrichtung selbsthemmend ausgelegt. Hierdurch wird in einfacher Weise die Gewindespindel seitens des Zahnradgetriebes der Notbetätigungseinrichtung an ihrer Verdrehung gehindert.

Anspruch 7 schlägt eine Längsnut in der Gewindespindel vor, durch die die Gewindespindel beispielsweise über eine Paßfeder mit dem Zahnrad der Notbetätigungseinrichtung drehfest und dabei in Axialrichtung verschieblich verbunden ist. Alternativ kann der Formschluß beispielsweise auch über eine Abflachung an der Gewindespindel hergestellt werden. Die Längsnut bzw. die Abflachung können entweder innerhalb oder außerhalb des Gewindebereiches der Spindel angeordnet sein. Im ersten Fall ergibt sich eine geringe Baulänge der Einheit aus Fremdkraft- und Notbetätigungseinrichtung, die jedoch mit einem erhöhten fertigungstechnischen Aufwand (Entgraten des Gewindes im Bereich der Nut oder Abflachung) verbunden ist. Wird die Längsnut außerhalb des Gewindebereiches angeordnet, so muß die Spindel um den Betrag des Verstellbereiches verlängert werden.

Eine weitere Möglichkeit besteht darin, das Zahnrad der Notbetätigungseinrichtung fest mit einer Zwischenwelle zu verbinden, die ihrerseits axial verschieblich und drehfest (z. B. über eine Paßfeder) in einer hohl ausgeführten Gewindespindel geführt wird, wodurch die Baulänge der Gewindespindel reduziert werden kann.

Anspruch 4 beschreibt eine weitere Alternative einer Verdrehsicherung mit Freiheitsgrad in axialer Richtung, bei der die Linearführung der Gewindespindel von der in Längsrichtung der Gewindespindel verlaufenden Geradverzahnung des mit der Gewindespindel fest verbundenen Zahnrades der Notbetätigungseinrichtung übernommen wird. Zu beachten ist hierbei, daß die Breite der Verzahnung entsprechend dem Verstellweg der Gewindespindel zusätzlich der erforderlichen Überdeckung ausgeführt werden muß.

Erlaubt der Zielkonflikt zwischen kleiner Übersetzung und Selbsthemmung im Zahnradgetriebe der Notbetätigungseinrichtung keine selbsthemmende Verzahnungsgeometrie, so ist die Verdrehsicherung über ein eigenes Sperrelement darzustellen. Das Sperrelement kann beispielsweise unter Ausnutzung der Getriebeübersetzung als federbelastete Kugel oder Reibelement ausgeführt sein. Auch mit einem erhöhten Reibwert der Lagerung des Zahnradgetriebes der Notbetätigungseinrichtung kann die Selbsthemmung dargestellt werden.

In analoger Weise wird gemäß Anspruch 8 bei Muskelkraftbetrieb der Feststellbremsanlage das gewindespindelseitige Zahnrad der Fremdkraftbetätigungseinrichtung gegen Verdrehung festgelegt. Hierdurch schraubt sich bei einer Notbetätigung die Gewindespindel durch das feststehende Zahnrad hindurch und bewirkt auf diese Weise eine Axialverschiebung der Gewindespindel mit einhergehender Betätigung der Feststellbremse. Die Festlegung des Schneckenrades im Zahnradgetriebe der Fremdkraftbetätigungseinrichtung kann beispielsweise durch eine selbsthemmende Auslegung dieses Zahnradgetriebes oder durch erhöhte Reibung erfolgen (Anspruch 9).

Selbstverständlich kann durch Wirkungsumkehr in analoger Weise das Zahnrad der Fremdbetätigungseinrichtung drehfest und dabei axial verschieblich mit der Gewindespindel verbunden sein. In diesem Fall schraubt sich die Gewindespindel bei Fremdkraftbetätigung durch das Zahnrad der Notbetätigungseinrichtung hindurch, während bei Notbetätigung eine reine Linearbewegung der Gewindespindel stattfindet.

Durch die wechselseitige Festlegung derjenigen Zahnräder von Fremdkraft- und Notbetätigungseinrichtung, die in unmittelbarem Kontakt zur Gewindespindel liegen, wird in Kombination mit der drehfesten Anordnung eines der beiden Zahnräder erreicht, daß ein Wechsel zwischen Betätigung durch Fremdkraft und Muskelkraft beliebig möglich ist, unabhängig von der jeweils vorangegangenen Betätigungsart. Bei der beschriebenen Ansteuerungseinrichtung ist eine Rückstellung in eine Ausgangs- oder Referenzlage nicht erforderlich. Für beide Betriebsarten steht in jeder beliebigen Spindelstellung der volle restliche Verstellweg zur Verfügung.

Zwischen der Gewindespindel und den Radbremsen des Fahrzeugs ist zur Betätigung der Feststellbremse eine Kraftübertragungseinrichtung, beispielsweise in Form eines Gestänges oder einer Bowdenzuganordnung, vorgesehen. Da bei Notbetätigung (bzw. bei der beschriebenen Wirkungsumkehr entsprechend bei Fremdkraftbetätigung) die Gewindespindel nicht nur in axialer Richtung verschoben wird, sondern sich hierbei auch dreht, ist gemäß Anspruch 10 eine Lagereinrichtung vorzusehen, die verhindert, daß sich beispielsweise der Seilzug einer Bowdenzuganordnung verdrillt. Durch die Lagereinrichtung wird die Schraubbewegung der Gewindespindel in eine reine Linearbewegung umgewandelt. Die Lagereinrichtung ist in vorteilhafter Weise am Endabschnitt der Gewindespindel angeordnet. Aus Bauraumgründen kann die Lagereinrichtung jedoch auch an anderer Position im Verlauf der Kraftübertragungseinrichtung eingesetzt sein.

Wird die Gewindespindel gemäß Anspruch 11 als Hohlwelle ausgeführt, durch die ein Gestänge oder das Seil eines Bowdenzugs geführt wird, ist eine geringe Baulänge der Einheit aus den beiden Zahnradgetrieben von Fremdkraft- und Notbetätigungseinrichtung möglich.

Mit einer Notbetätigungseinrichtung gemäß Anspruch 12, die auf eine Einleitung der Muskelkraft über eine Drehbewegung ausgelegt ist, ergibt sich gegenüber einer linearen Krafteinleitung eine Reihe von Vorteilen: Durch die Drehbewegung kann in einfacher Weise eine Übersetzung realisiert werden. Aus ergonomischer Sicht sind Drehbewegungen einfacher auszuführen als Linearbewegungen. Bedienelemente für Drehbewegungen zeichnen sich außerdem durch ihren geringeren Platzbedarf aus. Die Übertragung der Drehbewegung auf das Zahnradgetriebe der Notbetätigungseinrichtung erfolgt hierbei durch eine starre oder auch flexible Welle, wodurch das Bedienelement weitestgehend frei gegenüber der Gewindespindel angeordnet werden kann.

Das Bedienelement ist in der Regel als Griff (siehe Ansprüche 15 bis 17) ausgeführt und in Reichweite des Fahrers angeordnet. Da die Notbetätigung der Feststellbremse gegenüber der Fremdkraftbetätigung den Ausnahmefall darstellt, kann u. U. sogar auf ein eigenes Bedienelement in Form eines Griffs verzichtet werden, indem bei Ausfall der Fremdkraftbetätigungseinrichtung die Gewindespindel über ein aufsteckbares Werkzeug, beispielsweise einem Inbusschlüssel aus dem Bordwerkzeugsatz, bewegt wird. Je nach Anordnung der Gewindespindel ist dabei auch ein direktes Aufsetzen des Werkzeuges auf das Zahnradgetriebe der Notbremsbetätigungseinrichtung (unter Verzicht auf die Welle) denkbar.

Für das Bedienelement sind verschiedene Grifformen möglich, die in Abstimmung mit der Übersetzung des Zahnradgetriebes der Notbetätigungseinrichtung und des sich daraus ergebenden aufzubringenden Drehmoments nach ergonomischen Gesichtspunkten zu wählen sind. Beispielsweise kann das Bedienelement als T-förmiger Griff, Stemgriff, Handrad, Kurbel etc. bzw. als Kombination aus den verschiedenen Elementen ausgebildet sein (siehe auch Ansprüche 15 bis 17).

Durch die vorteilhafte Weiterbildung der Erfindung nach Anspruch 13 ist das Bedienelement im Normalbetrieb (Fremdkraftbetrieb) der Feststellbremsanlage beispielsweise in der Innenverkleidung des Fahrzeugs versenkt angeordnet. Es tritt damit nach außen hin nicht störend in Erscheinung, da es bündig mit der Oberfläche der Innenverkleidung abschließt. Zum Zwecke der Notbetätigung wird das Bedienelement aus dieser versenkten Position herausverlagert. Dies kann gemäß Anspruch 14 beispielsweise durch eine teleskopierbare Welle erfolgen.

Der in Anspruch 15 beschriebene Klappgriff kann sowohl als T-förmiger Griff als auch als Kurbel verwendet werden. In der herausgeklappten Griffposition (Kurbelfunktion) kann bei geringem Drehmoment eine hohe Anzahl von Umdrehungen in kurzer Zeit aufgebracht werden. Hiermit ist bei ausreichender Feststellkraft ein schnelles Feststellen des Fahrzeugs in Alltagssituationen möglich. Ist eine höhere Feststellkraft erforderlich, wie dies beispielsweise bei einem Feststellen des Fahrzeuges an Wegstrecken mit starkem Gefälle bzw. bei Mitführen eines Anhängers der Fall ist, so kann die Feststellkraft über den eingeklappten T-förmigen Griff eingeleitet werden, der einen entsprechend großen Hebelarm für die Handkraft bietet, wobei der Bediener allerdings keine kontinuierliche Drehbewegung einleiten kann, sondern laufend umgreifen muß. Die Vereinigung der beiden Griffarten in einem Griffelement bietet den Vorteil, daß keine losen Teile vorhanden sind, die je nach Anforderung ummontiert werden müssen und bei Nichtbenutzung abhanden kommen können.

Der in einen T-förmigen Griff integrierte, herausziehbare Knopf (Anspruch 16) ermöglicht die Verwendung des Bedienelementes als T-förmigen Griff (wie unter Anspruch 15 beschrieben) oder als Kurbel zum Aufbringen eines geringeren Drehmomentes bei höherer Umdrehungszahl.

Anspruch 17 beschreibt die Alternative einer Welle mit Gelenken, die bei Nichtgebrauch in ihrer gestreckten Lage platzsparend untergebracht werden kann. Zum Aufbringen einer Drehbewegung wird die Welle ausgeklappt, wodurch ein Hebelarm entsteht, durch den ein entsprechendes Drehmoment aufgebracht werden kann. Derartige klappbare Kurbeln sind an sich beispielsweise bei Wellen zur Verstellung von Markisen oder Projektionsleinwänden bekannt

Wie bereits unter Anspruch 7 beschrieben, kann die Verdrehsicherung der Gewindespindel auf vielfältige Weise realisiert werden. Anspruch 18 beschreibt in diesem Zusammenhang die Festlegung des Zahnradgetriebes der Notbetätigungseinrichtung über den Formschluß des Bedienelementes in seiner versenkten Stellung. Der Kraftfluß bei Abstützung der Gewindespindel gegenüber einer Verdrehung erfolgt über: Innenverkleidung - Bedienelement - Welle - Zahnradgetriebe der Notbetätigungseinrichtung. In der herausveriagerten Position des Bedienelementes ohne Formschluß mit der Innenverkleidung ist ein Fremdkraftbetrieb der Feststellbremse mit definiertem Stellweg nicht möglich und aus Sicherheitsgründen schaltungstechnisch auszuschließen.

Anspruch 19 beschreibt eine weitere, einfach aufgebaute und sicher wirkende Verdrehsicherung für die Gewindespindel für den Fall der Fremdkraftbetätigung, mit einer Umschlingungsfeder, die bei Fremdkrafteinleitung die Gewindespindel festlegt und bei Notbetätigung eine Verdrehung der Gewindespindel ermöglicht. Umschlingungsfedem an sich sind zwar bekannt, beispielsweise aus der DE 195 17 485 A1, jedoch ist der erfindungsgemäße Einsatz in einer Feststellbremsanlage nicht vorbeschrieben. Umschlingungsfedem lassen sich mit nur geringem Zusatzaufwand kostengünstig in die Feststellbremsanlage integrieren. Mit der nicht mehr zwingend selbsthemmenden Auslegung des Zahnradgetriebes der Notbetätigungseinrichtung kann eine kleinere Übersetzung gewählt werden, durch die eine reduzierte Umdrehungszahl bei Muskelkraftbetrieb erreicht wird. Durch das kleinere Übersetzungsverhältnis erhält der Benutzer anhand des ansteigenden Bedienmomentes eine direkte Rückmeldung über die auf die Feststellbremse aufgebrachte Feststellkraft. Gegenüber einem Sperrmechanismus mit federbelasteter Kugel wird der Notbetätigungsbetrieb nicht durch das Rastmoment bei jeder Umdrehung beeinträchtigt. Gegenüber Verdrehsicherungen mit einem Reibelement ergeben sich durchweg geringere Bedienkräfte. Im Vergleich zur weiteren Alternative einer bewußten Erhöhung des Reibwertes der Lagerung im Zahnradgetriebe der Notbetätigungseinrichtung zeichnet sich die Verdrehsicherung mit einer Umschlingungsfeder durch größere Funktionssicherheit aus. Im Gegensatz zu Verdrehsicherungen in Form federbelasteter Verzahnungen (Ratschenprinzip) arbeitet die vorgeschlagene Umschlingungsfeder geräuschlos und drehrichtungsunabhängig.

Gemäß Anspruch 20 greifen die Enden der Umschlingungsfeder formschlüssig zwischen zwei Abschnitte der Welle ein. Dabei kann der getriebeseitige Abschnitt der Welle auch unmittelbar von einem Element des Zahnradgetriebes der Notbetätigungseinrichtung, beispielsweise dem Endabschnitt der Schnecke, gebildet werden. Durch die geteilte Welle wird die Umschlingungsfeder angesteuert und je nach Richtung der Krafteinleitung die Umschlingungswirkung aufgehoben bzw. verstärkt. Um konkret die erfindungsgemäße Funktion der Feststellbremsanlage gewährleisten zu können, wird bei Einleitung eines Drehmomentes über die Welle der Notbetätigungseinrichtung die Umschlingungswirkung der Feder aufgehoben, während bei einem Antrieb über die Fremdkraftbetätigungseinrichtung das Zahnradgetriebe der Notbetätigungseinrichtung und damit die Gewindespindel über die Umschlingungsfeder festgelegt wird.

Gemäß Anspruch 21 kann die Umschlingungsfeder in besonders einfacher Weise unmittelbar im Gehäuse einer Ansteuerungseinrichtung für eine Feststellbremse angeordnet werden.

Durch die Wippe gemäß Anspruch 22 wird eine unmittelbare Anbindung der Seilzüge an die Spindel ermöglicht, bei geringer axialer Baulänge und geringem baulichen Aufwand. Mit der Wippe können die beiden Seilzüge einer Feststellbremsanlage unmittelbar an die Ansteuerungseinrichtung angebunden werden, ohne das Erfordernis einer eigenen Einrichtung zur Aufteilung der Feststellbremskraft ("Seilweiche"). Durch die Kippbeweglichkeit der Wippe kann sich diese schrägstellen und damit unterschiedlich lange Seilzüge zu den Feststellbremsen der beiden Fahrzeugseiten ausgleichen. Derartige Längenunterschiede entstehen beispielsweise infolge von Fertigungstoleranzen oder aufgrund unterschiedlicher Längung während des Betriebs der Feststellbremse.

Der kugelförmige Kopf des Bolzens (Anspruch 23) bildet das Axiallager für den Notbetätigungsfall mit der sich drehenden Spindel.

Gemäß Anspruch 24 sind die Wippe und das Gehäuse, in der die Fremdkraft- und die Notbetätigungseinrichtung zusammengefaßt sind, so geformt, daß sich die Seilzüge mit ihrem Einsetzen selbst einfädeln. So können die Seilzüge beispielsweise aus dem Hinterachsbereich des Kraftfahrzeuges durch karosserieseitige Rohre bis zu einer Ansteuerungseinrichtung im Bereich der Mittelkonsole durchgeschoben werden. Dort fädeln sie von selbst in die Wippe ein, so daß kein weiterer manueller Arbeitsschritt mehr erforderlich ist.

Durch die Integration einer Nachstelleinrichtung unmittelbar in die Ansteuerungseinrichtung ergibt sich eine besonders kompakte und kostengünstige Bauweise (Anspruch 25). Durch die Nachstelleinrichtung wird unabhängig von Setz- und Verschleißerscheinungen der volle Stellweg der Spindel gewährleistet.

Anspruch 26 beschreibt eine Ansteuerungseinrichtung mit einer Hohlspindel und zugeordneter Nachstelleinrichtung. Hierbei ist ein Zwischenglied in Form eines Schlittens mit einem Zahnelement vorgesehen, das bei gelöster Feststellbremse eine Relativbewegung (Nachstellbewegung) zwischen der Stange und der Spindel ermöglicht, so daß sich die Stange entsprechend dem Verschleiß- oder dem Setzmaß durch die Hohlspindel durchschieben kann. Eine Mechanik zur Umsetzung dieser Nachstellbewegung ist in ähnlicher Form beispielsweise in der WO 95/27642 A1 beschrieben.

Gemäß Anspruch 27 ist eine besonders einfache Montage möglich, indem die Stange durch die Hohlspindel durchgeschoben wird und anschließend selbsttätig in das Zahnelement einrastet. Somit kann die Montage vollautomatisch durchgeführt werden, ohne eigenen Montageschritt zur Befestigung der Stange an der Spindel.

Mögliche Ausführungsbeispiele der Erfindung sind nachfolgend in der Zeichnung näher dargestellt und beschrieben. Es zeigt
- Figur 1: ein erstes Ausführungsbeispiel der Erfindung, mit zwei als Schneckengetrieben ausgebildeten Zahnradgetrieben für die Fremdkraft- und Notbetätigungseinrichtung,
- Figur 2: ein zweites Ausführungsbeispiel der Erfindung mit einer Paarung aus einem geradverzahnten Zahnrad und einer Schnecke an der Notbetätigungseinrichtung,
- Figur 3: ein drittes Ausführungsbeispiel der Erfindung mit einer als Hohlwelle ausgebildeten Gewindespindel,
- Figuren 4 bis 6: Ausführungsbeispiele von Bedienelementen der Notbetätigungseinrichtung,
- Figur 7: einen Querschnitt durch die Welle der Notbetätigungseinrichtung im Bereich der Umschlingungsfeder,
- Figur 8: ein Ausführungsbeispiel der Erfindung mit einer Ansteuerungseinrichtung mit einer Wippe,
- Figur 9: einen Schnitt entlang der Schnittverlaufslinie A-A in Figur 8,
- Figur 10: ein weiteres Ausführungsbeispiel des Gegenstandes von Figur 8,
- Figur 11: eine Ansteuerungseinrichtung mit Hohlspindel und Nachstelleinrichtung, in Schnittdarstellung,
- Figur 12: eine vergrößerte Darstellung des Anbindungsbereiches des Schlittens an die Gewindespindel und
- Figur 13: eine Schnittdarstellung entsprechend der Schnittverlaufslinie B-B in Figur 12.

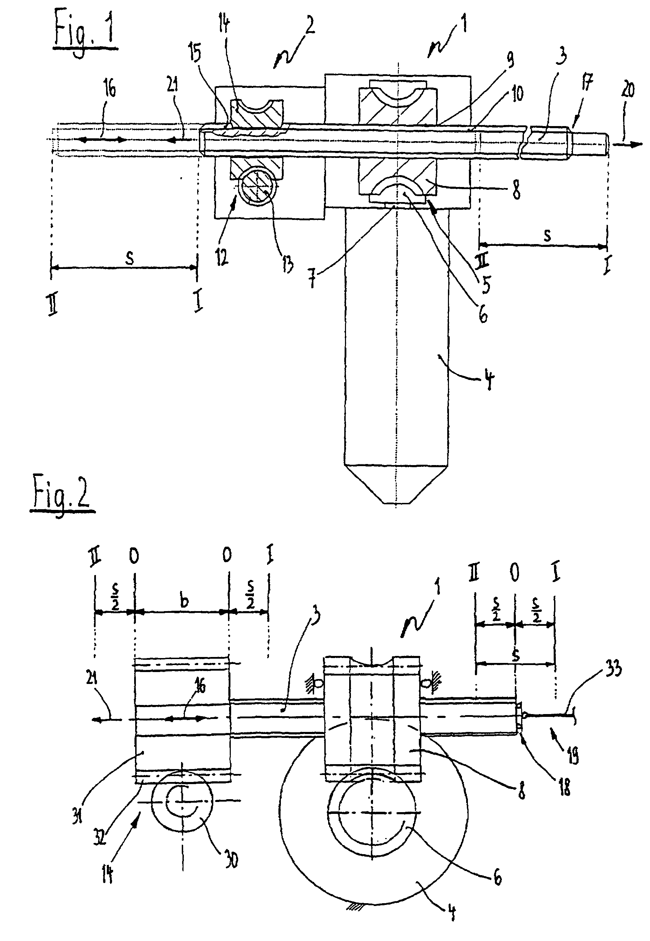

Die Figuren 1 bis 3 zeigen verschiedene Ausführungsbeispiele der Erfindung in schematisierter Darstellung. Gleiche oder gleichwirkende Teile sind dabei mit jeweils denselben Bezugszahlen bezeichnet.

Figur 1 zeigt eine erfindungsgemäße Ansteuerungseinrichtung für eine Feststellbremsanlage eines Fahrzeugs, mit einer Fremdkraftbetätigungseinrichtung 1 sowie einer Notbetätigungseinrichtung 2, die beide auf eine Gewindespindel 3 wirken. Die Fremdkraftbetätigungseinrichtung 1 setzt sich in an sich bekannter Weise aus einer von einem Elektromotor gebildeten Stelleinheit 4 sowie einem Zahnradgetriebe 5 zusammen. Das Zahnradgetriebe 5 besteht aus einer dreh- und axialfest mit der Antriebswelle 7 der Stelleinheit 4 verbundenen Schnecke 6, die mit einem Schneckenrad 8 kämmt. Das Schneckenrad 8 weist ein Innengewinde 9 auf, das mit einem Bewegungsgewinde 10 an der Gewindespindel 3 zusammenwirkt. Die Stelleinheit 4 wird von einer nicht dargestellten elektronischen Steuerungseinrichtung angesteuert, die entweder automatisch in Abhängigkeit vom Zustand des Fahrzeugs oder willkürlich durch den Fahrer gesteuert eine Betätigung der Feststellbremse des Fahrzeugs einleitet.

Bei einem Ausfall der Stelleinheit 4 kann über die Notbetätigungseinrichtung 2 die Gewindespindel 3 per Muskelkraft verstellt werden. Hierzu weist die Notbetätigungseinrichtung 2 ein Zahnradgetriebe 12 mit einer Schnecke 13 und einem Schneckenrad 14 auf. Das Schneckenrad 14 ist über eine Längsnut 15 der Gewindespindel 3 und eine Feder drehfest und dabei in Axialrichtung 16 verschieblich mit der Gewindespindel 3 verbunden.

An einem der Endabschnitte 17 der Gewindespindel 3 ist eine Lagereinrichtung 18 (siehe Figur 2) angeordnet, an der eine Kraftübertragungseinrichtung 19 zur Übertragung der Bremskraft auf die Feststellbremse angreift. Die Kraftübertragungseinrichtung 19 kann beispielsweise von einem Bremsseil oder einem Bremsgestänge gebildet werden. Der Pfeil 20 gibt die Richtung der Kraft an, die von den Rückstellfedern der Feststellbremsen auf die Gewindespindel 3 ausgeübt wird.

Für die Aufrechterhaltung der Feststellbremskraft nach dem Spannen der Radbremsen ist kein separater Rastmechanismus oder dergleichen erforderlich, da die Position des Seils oder des Gestänges sowohl bei Fremdkraft- als auch Notbetätigung durch die Selbsthemmung zwischen dem Bewegungsgewinde 10 der Gewindespindel 3 und dem Innengewinde 9 des Schneckenrades 8 gehalten wird.

In Figur 1 ist die Gewindespindel 3 in derjenigen Stellung I dargestellt, in der die Feststellbremse vollkommen gelöst ist. Die strichlierten Linien geben die Position II an, in der die Feststellbremse maximal angezogen ist. Der Weg s zwischen den beiden Position I und II entspricht dem maximalen Verstellweg.

Bei einer Betätigung der Festellbremse durch Fremdkraft wird über die Stelleinheit 4 die Schnecke 6 und damit das Schneckenrad 8 in Drehung versetzt. Da das Zahnradgetriebe 12 gegenüber einem Antrieb von seiten der Fremdbetätigungseinrichtung 1 selbsthemmend ausgelegt ist, kann sich die Gewindespindel 3, die über die Längsnut 15 drehfest mit dem durch Selbsthemmung festgelegten Schneckenrad 14 des Zahnradgetriebes 12 verbunden ist, nicht verdrehen. Durch die Rotation des Schneckenrades 8 wird die Gewindespindel 3, ausgehend von der in Figur 1 dargestellten Ausgangslage, in Richtung des Pfeils 21 nach links durch das Schneckenrad 8 hindurch geschoben und spannt hierbei die Feststellbremse entgegen der Federkraft 20. Bei Umkehrung der Drehrichtung der Stelleinheit 4 wird die Feststellbremse gelöst. Die Länge der Nut 15 ist auf den maximalen Verstellweg s abzustimmen.

Der manuelle Notbetrieb der Feststellbremse ist aus jeder Position der Fremdkraftbetätigungseinrichtung 1 heraus möglich. Durch Rotation der Schnecke 13 und damit des Schneckenrades 14 wird die Gewindespindel 3 durch den Formschluß über die Längsnut 15 in Drehung versetzt Da das Zahnradgetriebe 5 der Fremdkraftbetätigungseinrichtung 1 bei Antrieb von seiten der Notbetätigungseinrichtung 2 selbsthemmend ausgelegt ist, schraubt sich die Gewindespindel 3 durch das Schneckenrad 8 hindurch. Die Gewindespindel 3 wird hierbei in Axialrichtung 16 verstellt. Diese Verstellung der Gewindespindel 3 kann aus jeder Position heraus über den gesamten restlichen Verstellweg s erfolgen. Umgekehrt steht aus jeder Position der Notbetätigungseinrichtung 2 auch für die Stelleinheit 4 der gesamte restliche Verstellweg s zur Verfügung.

Figur 2 zeigt ein zweites Ausführungsbeispiel der Erfindung, bei dem die Notbetätigungseinrichtung 2 ein Zahnradgetriebe 12 mit einem Schraubrad 30 und einem geradverzahnten Zahnrad 31 aufweist. Das Zahnrad 31 ist starr mit der Gewindespindel 3 verbunden. Die Fremdkraftbetätigungseinrichtung 1 ist wie in Figur 1 beschrieben aufgebaut. Die Geradverzahnung 32 des Zahnrades 31 verläuft in Axialrichtung 16 und ersetzt die Längsnut 15 des ersten Ausführungsbeispiels. Die Breite b des Zahnrades 31 ist entsprechend dem maximalen Verstellweg s zu bemessen. Die Positionen I und II geben die beiden Extremlagen der Gewindespindel 3 und des Zahnrades 31 an. Ausgehend von der Mittellage 0 steht nach beiden Richtungen der halbe Verstellweg s/2 zur Verfügung.

Bei Fremdkraftbetrieb verhindert das selbsthemmend ausgelegte Zahnradgetriebe 12 eine Verdrehung der Gewindespindel 3, die sich über das Zahnrad 31 am Zahnrad 30 abstützt. Die Bewegung der Gewindespindel 3 in Axialrichtung 16 erfolgt entlang der Geradverzahnung 32 des Zahnrades 31.
Umgekehrt wird bei Verstellung der Feststellbremse über die Notbetätigungseinrichtung 2 die Gewindespindel 3 über das Schraubrad 30 und das Zahnrad 31 in Rotation versetzt. Wie bereits anhand des ersten Ausführungsbeispiels beschrieben, verändert sich hierbei die Position von Schraubrad 30 zu Zahnrad 31 nicht. Da die Gewindespindel 3 neben der Axialbewegung in Richtung des Pfeils 16 auch eine Rotationsbewegung ausführt, ist eine Lagereinrichtung 18 vorgesehen, die eine Verdrillung der als Bremsseil 33 ausgebildeten Kraftübertragungseinrichtung 19 verhindert und eine reine Linearbewegung in Axialrichtung 16 erzeugt.

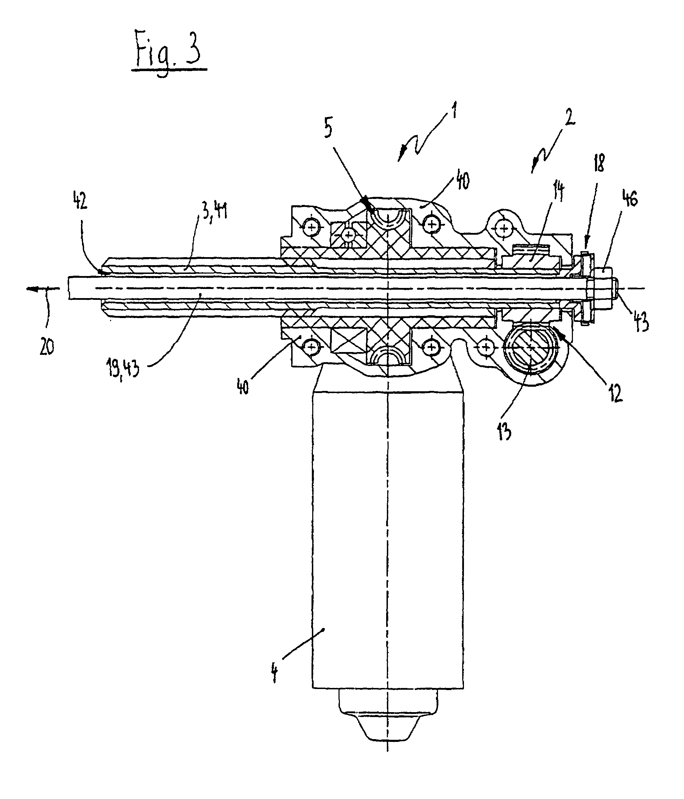

Figur 3 zeigt eine Ansteuerungseinrichtung für eine Feststellbremse mit einem Gehäuse 40, in dem die Zahnradgetriebe 5 und 12 von Fremdkraft- und Notbetätigungseinrichtung 1 bzw. 2 gemeinsam angeordnet sind. Die Gewindespindel 3 ist hierbei als Hohlwelle 41 ausgebildet und nimmt in ihrem Inneren 42 eine als Stange 43 ausgebildete Kraftübertragungseinrichtung 19 auf. Durch die Führung der Stange 43 im Inneren 42 der Hohlwelle 41 ergibt sich eine Umkehrung der Richtung der Kraft 20 gegenüber den beiden vorangegangenen Ausführungsbeispielen. Die Stange 43 ist über eine Lagereinrichtung 18, die eine Entkoppelung von der Drehbewegung der Gewindespindel 3 bewerkstelligt, sowie über eine Verschraubung 46 mit der Gewindespindel 3 verbunden. Wird eine Lagereinrichtung 18 mit geringer innerer Reibung (z. B. Nadellager) gewählt, so kann auf eine Verdrehsicherung der Kraftübertragungseinrichtung 19 verzichtet werden.

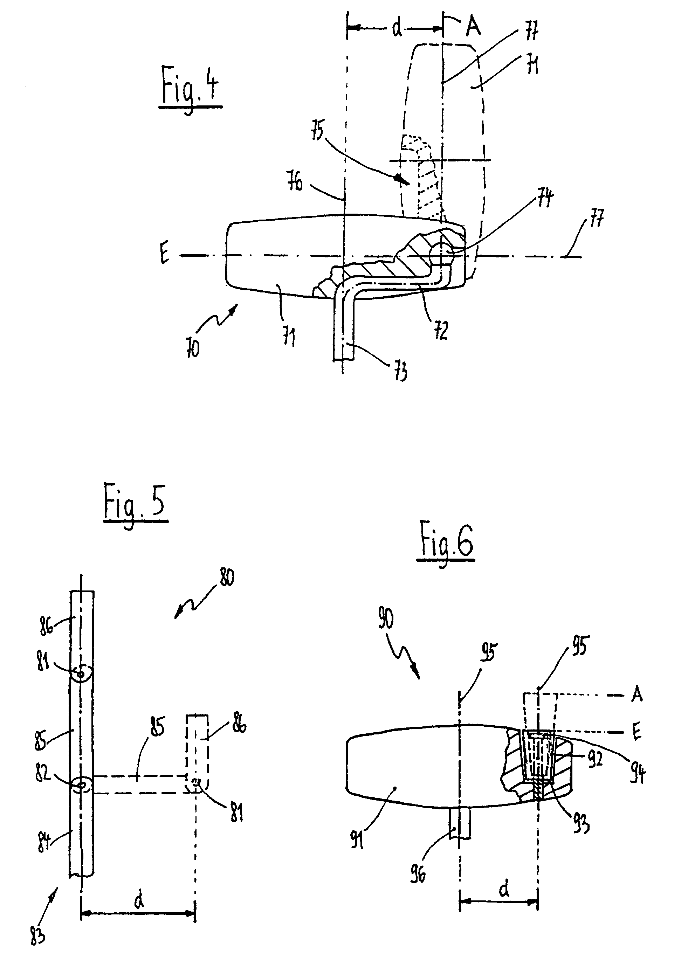

Das Bedienelement 70 gemäß Figur 4 besteht aus einem balligen Griffstück 71 mit einer Längsachse 77, das am abgewinkelten Endabschnitt 72 einer Welle 73 der Übertragungseinrichtung 11 angeordnet ist. Das Griffstück 71 ist mit durchgezogenen Linien in seiner eingeklappten Position E und mit strichlierten Linien in seiner ausgeklappten Position A dargestellt. Die Klappung wird durch ein Kugelgelenk 74 ermöglicht. In der Position E erfolgt die Übertragung des Drehmomentes vom T-förmigen Griffstück 71 auf den gekröpften Endabschnitt 72 über eine formschiußerzeugende Ausnehmung 75 an der Unterseite des Griffstückes 71 ohne Relativbewegung zwischen Welle 73 und Griffstück 71. In der Position A entsteht ein Hebelarm d zur Längsachse 76 der Welle 73, über den der Bediener mittels einer Kurbelbewegung ein Drehmoment in die Welle 73 einleiten kann. Hierbei gewährleistet das Kugelgelenk 74, daß das Griffstück 71 sich in der Hand des Bedieners nicht mitdreht.

In Figur 5 ist Bedienelement 80 dargestellt, das durch eine Welle 83 der Übertragungseinrichtung 11 selbst gebildet wird. Hierzu ist die Welle 83 durch zwei Gelenke 81 und 82 in die einzelnen Abschnitte 84, 85 und 86 unterteilt. Die durchgezogenen Linien zeigen die Position der Welle 83 in ihrer Nichtgebrauchsstellung. Die strichlierte Darstellung zeigt den herausgeklappten mittleren Abschnitt 85 sowie den parallel zum unteren Abschnitt 84 verlaufenden oberen Abschnitt 86. Durch das Herausklappen wird ein Hebelarm d geschaffen, der eine Krafteinleitung durch eine Kurbelbewegung ermöglicht. Der obere Abschnitt 86 kann mit einem drehbar angebrachten Aufsatz versehen sein, der ein Mitdrehen in der Hand des Bedieners ermöglicht. Die klappbare Welle 83 bietet dann besondere Vorteile, wenn der untere Abschnitt 84 der Welle 83 teleskopierbar ausgeführt ist, so daß die Welle 83 in einer Öffnung lediglich von der Größe des Wellendurchmessers versenkt und beispielsweise durch Knopfdruck über einen federbelasteten Rastmechanismus ausgefahren werden kann.

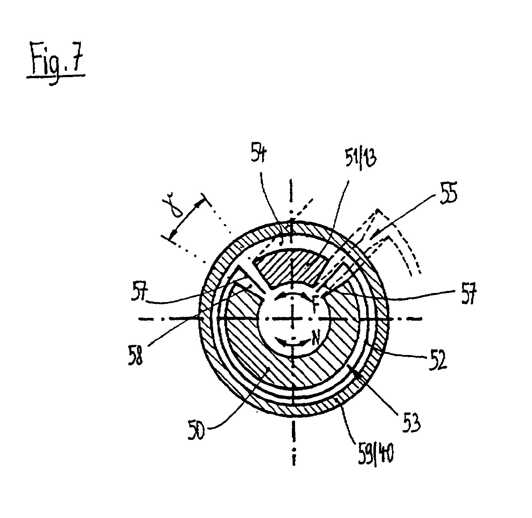

Das Bedienelement 90 gemäß Figur 6 weist ein Griffstück 91 auf, das an einer Seite einen kegelstumpfförmigen Knopf 92 beinhaltet. Der Knopf 92 ist mit durchgezogenen Linien in seiner versenkten Position E dargestellt, in der er in einer Vertiefung 93 des Griffes 91 verschwindet. Die herausgezogene Position A des Knopfes 92 ist strichliert dargestellt. Die Position A wird durch eine Schraube 94 nach oben hin begrenzt. Die Schraube 94 dient als Drehachse für den Knopf 92. Zum Aufbringen eines großen Drehmomentes auf die Welle 96 der Übertragungseinrichtung 11 wird der Griff 91 selbst benutzt. Zur Aufbringung kleiner Drehmomente (Hebelarm d zur Längsachse 95 der Welle 96) wird der Knopf 92 entgegen seiner Gewichtskraft aus der Vertiefung 93 herausgezogen und das Bedienelement 90 im Sinn einer Kurbel über den Knopf 92 gedreht. Vorteilhaft ist hierbei die durch das Eigengewicht erzeugte selbsttätige Rückstellung des Knopfs 92 nach Gebrauch. Wegen der aus Gründen der Ergonomie erforderlichen Größe des Knopfes 92 ergibt sich eine etwas größere Raumhöhe des Griffes 91.

Die in den Figuren 4 bis 6 dargestellten Bedienelemente 70, 80 und 90 sind zweckmäßigerweise mit grafischen Symbolen zu versehen, die die Funktionsweise der Bedienelemente anschaulich erläutern.

Figur 7 zeigt eine in ihrer Gesamtheit mit 53 bezeichnete Welle zur Einleitung einer Drehbewegung auf das Zahnradgetriebe der Notbetätigungseinrichtung. Die Welle 53 ist in einen bedienerseitigen Abschnitt 50 und einen getriebeseitigen Abschnitt 51 unterteilt. Die Welle 53 kann auch so ausgebildet sein, daß die Trennstelle am Übergang zur Schnecke 13 der Notbetätigungseinrichtung liegt, so daß der Abschnitt 51 unmittelbar von der Schnecke 13 gebildet wird. Die beiden Abschnitte 50 und 51 greifen formschlüssig ineinander, indem der Abschnitt 51 mit seinem nasenförmigen Absatz 54 eine Aussparung 55 des Abschnittes 50 ausfüllt (siehe strichliert angedeutete perspektivische Darstellung). Zwischen den beiden Abschnitten 50 und 51 ist in Umfangsrichtung jeweils ein Zwischenraum 58 vorgesehen, der einen kleinen, begrenzten Verdrehwinkel γ zwischen den beiden Abschnitten 50 und 51 ermöglicht.

Eine Umschlingungsfeder 52, die im Schnitt mit nur einer Windung dargestellt ist, tatsächlich jedoch eine Mehrzahl schraubenförmig angeordneter Windungen aufweist, greift mit ihren nach innen abgebogenen Endabschnitten 57 in die Zwischenräume 58 zwischen den beiden Abschnitten 50 und 51 ein. Da im dargestellten Ausführungsbeispiel die Trennung der beiden Abschnitte 50 und 51 nahe des Zahnradgetriebes der Notbetätigungseinrichtung vorgenommen wurde, kann die Umschlingungsfeder 52 von einem stutzenförmigen Ansatz 59 des Gehäuses 40 (siehe Figur 3) unter Vorspannung aufgenommen werden.

Die Funktion der Umschlingungsfeder 52 wird nachfolgend näher erläutert: Bei einem Antrieb der Welle 53 über den bedienerseitigen Abschnitt 50 wird in beiden Drehrichtungen (Doppelpfeil N) durch die begrenzte Verdrehbarkeit des Abschnittes 50 gegenüber dem Abschnitt 51 die Umschlingungsfeder 52 zusammengezogen, d. h. sie löst sich von der zylindrischen Innenseite des Gehäusestutzens 59. Somit kann die Welle 53 in beiden Drehrichtungen N angetrieben werden, das heißt bei Einleitung eines Drehmomentes über die Notbetätigungswelle 53 ist die Verdrehsicherung aufgehoben, die Welle 53 dreht sich (zusammen mit der Umschlingungsfeder 52), so daß die Schnecke 13 und damit die Spindel angetrieben wird. Das Drehmoment wird hierbei über den Formschluß zwischen Aussparung 55 und Nase 54 der beiden Wellenabschnitte 50 und 51 sowie den dazwischenliegenden Endabschnitt 57 der Feder 52 übertragen.

Bei Fremdkraftantrieb versucht die Schnecke 13 und damit der Abschnitt 51 zunächst, sich unter Wirkung der Fremdkraft mitzudrehen. Hierbei wird jedoch in beiden Drehrichtungen des Abschnittes 51 (Doppelpfeil F) die Umschlingungsfeder 52 aufgeweitet, d. h. noch stärker an die Innenfläche des Gehäusestutzens 59 gepreßt. Hierdurch wird die Welle 53 - und damit die Schnecke 13 und die Gewindespindel - zuverlässig an einer Verdrehung gehindert.

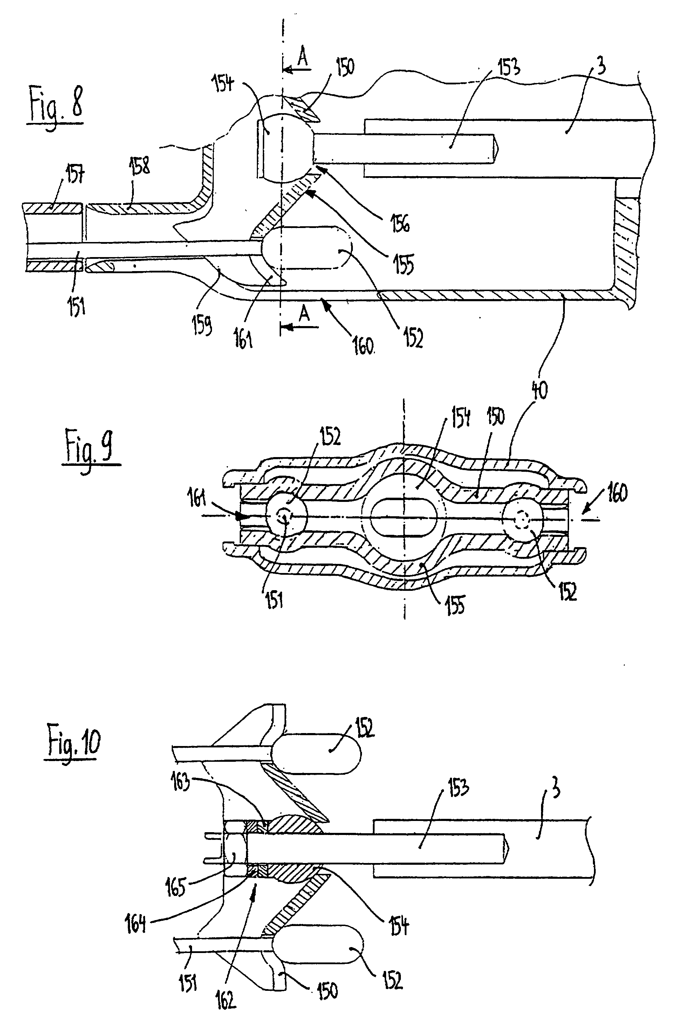

Die Figuren 8 und 9 zeigen ein erstes Ausführungsbeispiel einer Wippe 150, über die Seilzüge 151 (nur ein Seilzug dargestellt) an eine Ansteuerungseinrichtung für eine Feststellbremse angebunden sind. Die Seilzüge 151 führen direkt zu den Feststellbremsen an der Hinterachse des Kraftfahrzeuges und weisen an ihrem wippenseitigen Ende Nippel 152 auf. Die Wippe 150 ist über einen Bolzen 153 mit der Gewindespindel 3 verbunden. Der Bolzen 153 weist einen kugelförmigen Kopf 154 auf, als Gegenstück zu einer pfannenförmigen Ausbuchtung 155 der Wippe 150.

Entsprechend der langlochförmigen Öffnung 156 in der Ausbuchtung 155 kann sich die Wippe bei ungleichen Längen der Seilzüge 151 schrägstellen. Die Kugelpfanne 155 der Wippe 150 stellt die Verdrehbarkeit der Spindel 3 gegenüber der Wippe 150 für den Fall der Notbetätigung sicher. Die Wippe 150 ist gegenüber dem Gehäuse 40 der Ansteuerungseinrichtung verdrehsicher geführt.

Zum Einführen der Seilzüge 151 werden diese über ein karosserieseitiges Rohr 157, an das sich unmittelbar ein rohrförmiger Stutzen 158 des Gehäuses 40 anschließt, der Ansteuerungseinrichtung zugeführt. Durch eine Anlaufschräge 159 an der Wippe 150 werden die Nippel 152 schräg nach außen durch eine seitliche Austrittsöffnung 160 des Gehäuses 40 geführt. Nach dem Passieren des Nippels 152 gleitet das Seil 151 über eine schlitzförmige Aussparung 161 der Wippe 150 in das Gehäuse 40 zurück und nimmt dabei selbsttätig die in den Figuren 8 und 9 dargestellte Endlage ein.

Der Bolzen 153 ist mit der Spindel 3 beispielsweise verschraubt, verpreßt, etc. Selbstverständlich kann die Wippe 153 auch an eine Hohlspindel gemäß Figur 3 angebunden sein. Zur Verringerung der Reibung zwischen dem Kopf 154 und der Pfanne 155 ist der Kontaktbereich mit einer gleitfähigen und verschleißarmen Beschichtung und/oder einem Schmiermittel versehen.

Bei der Variante gemäß Figur 10 ist zwischen dem Bolzen 153 und dem Kopf 154 eine Axiallagerstelle 162 vorgesehen. Das Axiallager 162 kann beispielsweise als Nadellager oder - wie in Figur 3 dargestellt - in Form von Anlaufscheiben 163 und 164 aus einem Kunststoffmaterial mit geringem Reibungskoeffizienten ausgeführt sein. Somit bleibt der Kopf 154 und die Scheibe 163 bei sich drehender Spindel 3 (Notbetätigungsfall) in Ruhe, während sich der Bolzen 153 samt Befestigungsschraube 165 und Scheibe 164 mitdreht.

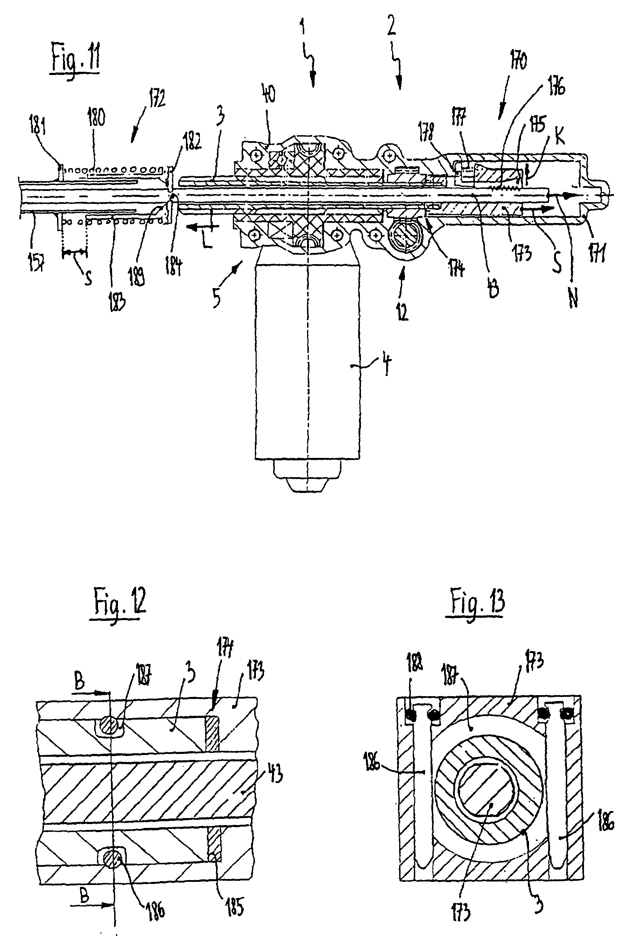

Die Figuren 11 bis 13 zeigen eine Ansteuerungseinrichtung analog Figur 3 mit einer in ihrer Gesamtheit mit 170 bezeichneten Nachstelleinrichtung, die in einer Erweiterung 171 des Gehäuses 40 untergebracht ist. Mit der Nachstelleinrichtung 170 wirkt eine Federeinrichtung 172 auf der gegenüberliegenden Seite der Ansteuerungseinrichtung zusammen, die eine Vorspannung auf die Stange 43 ausübt.

Die Nachstelleinrichtung 170 weist einen Schlitten 173 auf, der mit der Gewindespindel 3 unter Zwischenschaltung eines Axiallagers 174 verschieblich mitgeführt ist. Der Schlitten 173 ist dabei gegen Verdrehung im Gehäuseabschnitt 171 gesichert. Der Schlitten 173 nimmt ein kippbeweglich gelagertes, im Querschnitt etwa L-förmiges Zahnelement 175 auf. An der Unterseite des Zahnelementes 175 ist eine Verzahnung 176 vorgesehen, die mit einer entsprechenden Verzahnung 176 der Stange 43 zusammenwirkt. Eine Feder 177 hält das Zahnelement 175 in seiner in Figur 11 dargestellten Lage, in der der Schlitten 173 sich nahe eines Anschlages 178 des Gehäuses 40 befindet.

Die Federeinrichtung 172 besteht aus einer Feder 180, deren Vorspannung geringer ist als die Rückstellkraft der Federelemente in der Feststellbremse. Die Feder 180 ist zwischen der Abstützplatte 181 eines karosserieseitigen Rohres 157 und einer Scheibe 182 angeordnet. Ein Stützzylinder 183 zur Führung der Feder 180 liegt hierbei an der Scheibe 182 an, die in eine Ringnut 184 der Stange 43 eingreift. Der Stützzylinder 183 und das Rohr 157 greifen so ineinander, daß ein Nachstellweg s zur Verfügung steht.

Bei einer Betätigung der Feststellbremse durch Fremdkraft wird über den Elektromotor 4 und das Zahngetriebe 5 die Gewindespindel 3 durch das stillstehende Zahnradgetriebe 12 der Notbetätigungseinrichtung 2 hindurchgeschoben. Zusammen mit der Spindel 3 wird auch der Schlitten 173 in Richtung des Pfeiles S verfahren. Über die Verzahnung 176 nimmt das Zahnelement 175 des Schlittens 173 die Stange 43 mit, die damit die Feststellbremse spannt.

Zum Lösen der Feststellbremse wird der Elektromotor 4 in entgegengesetzter Richtung angetrieben, wodurch die Gewindespindel 3 und der Schlitten 173 entsprechend dem Pfeil L verfahren. Bei vollständig gelöster Feststellbremse liegt das Zahnelement 175 am Anschlag 178 des Gehäuses 40 an. Aufgrund der geometrischen Verhältnisse und unter der Wirkung der Feder 177 kippt nunmehr das Zahnelement 175 in Richtung des Pfeils K nach oben, so daß der Formschluß der Verzahnungen 176 von Zahnelement 175 und Stange 43 aufgehoben wird. Die Feder 180 der Federeinrichtung 172 ist nunmehr in der Lage, bei einem Spiel in der Kraftübertragungseinrichtung der Feststellbremse, das sich beispielsweise infolge von Setz- oder Verschleißerscheinungen eingestellt hat, die Stange 43 in Richtung des Pfeils N zu verschieben und damit die gesamte Anordnung spielfrei zu halten. Bei emeutem Spannen der Feststellbremse kommt mit dem Abheben des Zahnelementes 175 vom Anschlag 178 die Verzahnung 176 wieder in Eingriff, so daß die Stange 43 formschlüssig mit dem Schlitten 173 und damit der Gewindespindel 3 verbunden ist und die Feststellbremsen spannen kann.

Das in Figur 12 vergrößert dargestellte Axiallager 174 in Form einer Kunststoffscheibe 185 trennt für den Fall einer Notbetätigung die rotierende Gewindespindel 3 vom Schlitten 173.

Die Schnittdarstellung der Figur 13 zeigt in vergrößertem Maßstab die Anbindung des Schlittens 173 an die Gewindespindel 3. Zwei Sicherungsstifte 186 im Schlitten 173 greifen hierbei in eine Nut 187 der Gewindespindel 3 ein. Die Sicherungsstifte 186 sind beispielsweise durch O-Ringe 188 gegen unbeabsichtigtes Entfernen gesichert. Aus Figur 6 geht der abgeflachte Querschnitt der Stange 43 hervor, die in ihrem rückwärtigen Abschnitt oberseitig die Verzahnung 176 trägt.

Zur Montage der Stange 43 wird diese durch das Rohr 157 und die bereits aufgesteckte Federeinrichtung 172 hindurchgeschoben. Anlaufschrägen 189 am Endabschnitt des Stützzylinders 183 gewährleisten das sichere Einfädeln der Stange 43 in die Hohlspindel 3. Mit dem Durchtritt der Stange 43 durch den Schlitten 173 gleiten die Verzahnungen 176 aneinander entlang, bis die spielfreie Endlage erreicht ist. Abschließend wird die Scheibe 182 in die Ringnut 184 der Stange 43 eingesetzt.

## Patentansprüche

1. Feststellbremsanlage für ein Fahrzeug, mit einer Fremdkraftbetätigungseinrichtung (1), die über eine Stelleinheit eine Gewindespindel (3) antreibt, die auf die Feststellbremse wirkt sowie mit einer Notbetätigungseinrichtung (2) zur Betätigung der Feststellbremse durch Muskelkraft bei einem Ausfall der Fremdkraftbetätigungseinrichtung,
**dadurch gekennzeichnet, daß** sowohl die Fremdkraft- als auch die Notbetätigungseinrichtung (1 bzw. 2) ein Zahnradgetriebe (5 bzw. 12) zur Verstellung der Gewindespindel (3) aufweisen.

2. Feststellbremsanlage nach Anspruch 1,
**dadurch gekennzeichnet, daß** das Zahnradgetriebe (12) der Notbetätigungseinrichtung (2) von einer über Muskelkraft antreibbaren Schnecke (13) sowie einem mit der Schnecke (13) zusammenwirkenden Schneckenrad (14) gebildet wird, das seinerseits die Gewindespindel (3) antreibt.

3. Feststellbremsanlage nach Anspruch 1 und/oder 2,
**dadurch gekennzeichnet, daß** das Zahnradgetriebe (5) der Fremdkraftbetätigungseinrichtung (1) von einer von der Stelleinheit antreibbaren Schnecke (6) sowie einem mit der Schnecke (6) zusammenwirkenden Schneckenrad (8) gebildet wird, das seinerseits über ein Innengewinde (9) die Gewindespindel (3) antreibt.

4. Feststellbremsanlage nach Anspruch 1 und/oder 3,
**dadurch gekennzeichnet, daß** das Zahnradgetriebe (12) der Notbetätigungseinrichtung (2) von einem über Muskelkraft antreibbaren Schraubrad (30) sowie einem mit dem Schraubrad (30) zusammenwirkenden geradverzahnten Zahnrad (31) gebildet wird, das seinerseits die Gewindespindel (3) antreibt.

5. Feststellbremsanlage nach einem der vorangegangenen Ansprüche,
**dadurch gekennzeichnet, daß** die Gewindespindel (3) bei Fremdkraftbetätigung gegen Verdrehung festgelegt ist.

6. Feststellbremsanlage nach Anspruch 5,
**dadurch gekennzeichnet, daß** die drehfeste Abstützung der Gewindespindel (3) durch das selbsthemmend ausgelegte Zahnradgetriebe (12) der Notbetätigungseinrichtung (2) erfolgt.

7. Feststellbremsanlage nach einem der Ansprüche 1 bis 3, 5 oder 6,
**dadurch gekennzeichnet, daß** die Gewindespindel (3) eine Längsnut (15) oder eine Abflachung aufweist, in die das Zahnrad (14) der Notbetätigungseinrichtung (2) drehfest und axial verschieblich eingreift.

8. Feststellbremsanlage nach einem der vorangegangenen Ansprüche,
**dadurch gekennzeichnet, daß** das Zahnrad (14) der Fremdkraftbetätigungseinrichtung (1) bei Antrieb der Gewindespindel (3) über die Notbetätigungseinrichtung (2) gegen Verdrehung festgelegt ist.

9. Feststellbremsanlage nach Anspruch 8,
**dadurch gekennzeichnet, daß** die Verdrehung des Zahnrades (14) durch das selbsthemmend ausgelegte Zahnradgetriebe (5) der Fremdkraftbetätigungseinrichtung (1) verhindert wird.

10. Feststellbremsanlage nach einem der vorangegangenen Ansprüche, mit einer Kraftübertragungseinrichtung zwischen der Gewindespindel und der Feststellbremse, die die Verstellbewegung der Gewindespindel auf die Feststellbremse überträgt,
**gekennzeichnet durch** eine zwischen der Gewindespindel (3) und der Kraftübertragungseinrichtung (19) angeordnete Lagereinrichtung (18), die eine Entkopplung der Drehbewegung der Gewindespindel (3) von ihrer Axialbewegung (16) bewirkt.

11. Feststellbremsanlage nach einem der vorangegangenen Ansprüche,
**dadurch gekennzeichnet, daß** die Spindel (3) als Hohlwelle (41) ausgeführt ist, durch deren Inneres (42) wenigstens ein Element (43) der Kraftübertragungseinrichtung (19) hindurchgeführt ist.

12. Feststellbremsanlage nach einem der vorangegangenen Ansprüche,
**gekennzeichnet durch** ein Bedienelement (50, 70, 80, 90), mit dem der Fahrzeugnutzer eine Drehbewegung auf eine zwischen dem Bedienelement (50, 70, 80, 90) und dem Zahnradgetriebe (12) der Notbetätigungseinrichtung (2) angeordnete Welle (52, 73, 83, 96) aufbringen kann.

13. Feststellbremsanlage nach einem der vorangegangenen Ansprüche,
**dadurch gekennzeichnet, daß** die Notbetätigungseinrichtung (2) ein Bedienelement aufweist, das in seiner Nichtgebrauchsstellung (E) in eine Aussparung (61) eines Elements (57) der Innenausstattung des Fahrzeugs verlagerbar ist

14. Feststellbremsanlage nach Anspruch 12 und/oder 13,
**dadurch gekennzeichnet, daß** die Welle (52) zusammenschiebbar ist.

15. Feststellbremsanlage nach einem der Ansprüche 12 bis 14,
**dadurch gekennzeichnet, daß** die Welle (73) an ihrem dem Bedienelement (70) zugewandten Endabschnitt (72) zur Bildung eines Hebelarms (d) abgewinkelt ist und das Bedienelement (70) von einem länglichen Griffstück (71) gebildet wird, das an einem Endbereich gelenkig mit dem abgewinkelten Endabschnitt (72) der Welle (73) verbunden ist, so daß das Bedienelement (70)
- eine erste Stellung (E) quer zur Längsachse (76) der Welle (73), mit Formschluß zum abgewinkelten Endabschnitt (72), und
- eine zweite, freidrehende Stellung (A) parallel zur Längsachse (76) der Welle (73)
einnehmen kann.

16. Feststellbremsanlage nach einem der Ansprüche 12 bis 14,
**dadurch gekennzeichnet, daß** das Bedienelement (90) als etwa T-förmiger Griff ausgebildet ist, der einen mit Abstand (d) und parallel zur Längsachse (95) der Welle (96) verlaufenden, drehbar gelagerten Knopf (92) aufweist, der zur Bildung einer Kurbel ausziehbar ist.

17. Feststellbremsanlage nach einem der Ansprüche 12 bis 14,
**dadurch gekennzeichnet, daß** die Welle (83) im Bereich ihres dem Bediener zugewandten Endabschnitts zwei Gelenke (81, 82) aufweist, die eine etwa Z-förmige Abwinkelung der beiden durch die Gelenke (81, 82) gebildeten Abschnitte (85, 86) ermöglichen, so daß die Welle (83) einen Kurbelabschnitt mit einem Hebelarm (d) bildet

18. Feststellbremsanlage nach einem der vorangegangenen Ansprüche,
**dadurch gekennzeichnet, daß** die Drehbewegung der Gewindespindel (3) bei Fremdkraftbetrieb durch die formschlüssige Festlegung des Bedienelementes (50) der Notbetätigungseinrichtung (2) verhindert wird.

19. Feststellbremsanlage nach einem der vorangegangenen Ansprüche,
**dadurch gekennzeichnet, daß** an der Notbetätigungseinrichtung (2) eine Verdrehsicherung in Form einer Umschlingungsfeder (52) vorgesehen ist.

20. Feststellbremsanlage nach Anspruch 19, mit einer Welle, über die der Fahrzeugnutzer eine Drehbewegung auf das Zahnradgetriebe der Notbetätigungseinrichtung aufbringen kann,
**dadurch gekennzeichnet, daß** die Welle (53) in zwei Abschnitte (50, 51) unterteilt ist, die formschlüssig ineinandergreifen und dabei begrenzt gegeneinander verdrehbar sind, wobei die Umschlingungsfeder (52) über die begrenzte Verdrehbarkeit der Abschnitte (50, 51) angesteuert wird.

21. Feststellbremsanlage nach Anspruch 19 und/oder 20,
**dadurch gekennzeichnet, daß** die Umschlingungsfeder (52) nahe des Zahnradgetriebes (12) der Notbetätigungseinrichtung (2) angeordnet ist.

22. Feststellbremsanlage nach einem der vorangegangenen Ansprüche, mit einer Kraftübertragungseinrichtung zwischen der Gewindespindel und der Feststellbremse, die die Verstellbewegung der Gewindespindel auf die Feststellbremse überträgt,
**dadurch gekennzeichnet, daß** die Kraftübertragungseinrichtung eine Wippe (150) umfaßt, die kippbeweglich an der Gewindespindel (3) angeordnet ist und zwei zu den Feststellbremsen führende Seilzüge (151) aufnimmt.

23. Feststellbremse nach Anspruch 22,
**dadurch gekennzeichnet, daß** die Wippe (150) über einen Bolzen (153) mit kugelförmigem Kopf (154) an die Gewindespindel (3) angebunden ist.

24. Feststellbremse nach Anspruch 22 und/oder 23,
**dadurch gekennzeichnet, daß** eine Einrichtung zum selbsttätigen Einfädeln der Seilzüge (151) in die Wippe (150) vorgesehen ist.

25. Feststellbremse nach einem der vorangegangenen Ansprüche,
**dadurch gekennzeichnet, daß** im Bereich der Ansteuerungseinrichtung, in der die Fremdkraft- und Notbetätigungseinrichtung (1 bzw. 2) zusammengefaßt sind, eine Nachstelleinrichtung (170) zum Ausgleich von Verschleiß- und Setzerscheinungen in der Feststellbremsanlage vorgesehen ist.

26. Feststellbremse nach Anspruch 25, wobei die Spindel als Hohlwelle ausgeführt ist, durch deren Inneres eine Stange zur Übertragung der Feststellkraft hindurchgeführt ist,
**dadurch gekennzeichnet, daß**
- die Nachstelleinrichtung (170) einen Schlitten (173) umfaßt, der zusammen mit der Spindel (3) entlang deren Längsachse verschiebbar ist,
- der Schlitten (173) ein Zahnelement (175) aufweist, das über eine aufhebbare Verrastung (176) mit der Stange (43) zusammenwirkt, wobei das Zahnelement (175) bei gelöster Feststellbremse außer Eingriff mit der Stange (43) ist und
- ein gegenüber der Karosserie des Fahrzeugs abgestütztes Federelement (172) auf die Stange (43) eine entgegen der Rückstellkraft der Feststellbremse wirkende Vorspannung ausübt.

27. Feststellbremse nach Anspruch 26,
**dadurch gekennzeichnet, daß** Anlaufschrägen (190) oder dergleichen vorgesehen sind, die ein selbsteinfädelndes Einführen der Stange (43) in die Ansteuerungseinrichtung ermöglichen.

## Claims

1. A parking brake system for a vehicle, with an external power actuating mechanism (1), which, via a setting unit, drives a worm gear spindle (3) which works on the parking brakes and with an emergency actuation mechanism (2) to operate the parking brakes by muscle power in the event of failure of the external power actuating mechanism,
**characterised in that** both the external power and also the emergency actuating mechanism (1 and 2) have a gear wheel drive (5 and 12) to adjust the worm gear spindle (3).

2. A parking brake system according to Claim 1,
**characterised in that** the gear wheel drive (12) of the emergency actuating mechanism (2) is formed from a worm (13) driven by muscle power, and a worm wheel working together with the worm (13), which for its part drives the worm gear spindle (3).

3. A parking brake system according to Claim 1 and/or Claim 2,
**characterised in that** the gear wheel drive (5) of the external power actuating mechanism (1) is formed from a worm (6) driven from the setting unit and a worm wheel (8) working together with the worm (6) which for its part drives the worm gear spindle (3) via an internal thread (9).

4. A parking brake system according to Claim 1 and/or Claim 3,
**characterised in that** the gear wheel drive (12) of the emergency actuating mechanism (2) is formed from a helical gearwheel (30), driven by muscle power, and a straight toothed gear wheel (31) working together with the helical gear wheel (30), which for its part drives the worm gear spindle (3).

5. A parking brake system according to one of the foregoing Claims,
**characterised in that** the worm gear spindle (3) is prevented from rotating under external power actuation.

6. A parking brake system according to Claim 5,
**characterised in that** the rotation-fast support of the worm gear spindle (3) is effected by the self-locking design of the gear wheel drive (12) of the emergency actuating mechanism (2).

7. A parking brake system according to one of the Claims 1 to 3, 5 or 6,
**characterised in that** the worm gear spindle (3) has a longitudinal groove or a flattening into which the gear wheel (14) of the emergency actuating mechanism (2) engages rotation-fast and sliding.

8. A parking brake system according to one of the foregoing Claims,
**characterised in that** the gear wheel (14) of the external power actuating mechanism (1) is locked against rotation during a drive to the worm gear spindle (3) by the emergency actuating mechanism (2).

9. A parking brake system according to Claim 8,
**characterised in that** the rotation of the gear wheel (14) is prevented by the self-locking design of the gear wheel drive (5) of the external power actuating mechanism (1).

10. A parking brake system according to one of the foregoing Claims, with a power transmission arrangement between the worm gear spindle and the parking brakes, which transmits the adjustment movement of the worm gear spindle to the parking brakes,
**characterised by** a bearing device (18) between the worm gear spindle (3) and the power transmission arrangement (19), which effects a decoupling of the rotational movement of the worm gear spindle (3) from its axial movement (16).

11. A parking brake system according to one of the foregoing Claims,
**characterised in that** the spindle (3) is constructed as a hollow shaft (41), through whose inside (42) at least one element (43) of the power transmission arrangement (19) is taken.

12. A parking brake system according to one of the foregoing Claims,
**characterised by** an operating element (50, 70, 80, 90) with which the vehicle user can bring a rotary motion to bear on a shaft (52, 73, 83, 96) arranged between the operating element (50, 70, 80, 90) and them gear wheel drive (12) of the emergency actuating mechanism (2).

13. A parking brake system according to one of the foregoing Claims,
**characterised in that** the emergency actuating mechanism (2) has an operating element, which in its non-used position (E) can be stored in a cut-out (61) of an element (57) of the interior outfitting of the vehicle.

14. A parking brake system according to Claim 12 and/or Claim 13,
**characterised in that** the shaft (52) can be telescoped.

15. A parking brake system according to one of the Claims 12 to 14,
**characterised in that** the shaft (73) is turned through an angle at the end section (72) nearest the operating element (70) to form a lever arm (d) and the operating element (70) is formed from an elongate grip (71), which is hinge jointed at an end region with the angled end section (72) of the shaft (73) so that the operating element (70) can take
- a first position (E) at an angle to the longitudinal axis (76) of the shaft (73), with positive engagement to the angled end section (72), and
- a second, free-turning position (A) parallel to the longitudinal axis (76) of the shaft (73).

16. A parking brake system according to one of the Claims 12 to 14,
**characterised in that** the operating element (90) is formed as a somewhat T-shaped grip, which has a rotatably mounted knob (92) running at a distance (d) and parallel to the longitudinal axis (95) of the shaft (96), which can be pulled out to form a crank.

17. A parking brake system according to one of the Claims 12 to 14,
**characterised in that** the shaft (83) has two hinge joints (81, 82) in the region of the end section toward the operator, which make possible a somewhat Z-shaped angling of the two sections (85, 86) formed by the two hinge joints (81, 82) so that the shaft (83) forms a crank section with a lever arm (d).

18. A parking brake system according to one of the foregoing Claims,
**characterised in that** the rotary movement of the worm gear spindle (3) in external power operation is prevented by the positive engagement locking of the operating element (50) of the emergency actuating mechanism (2).

19. A parking brake system according to one of the foregoing Claims,
**characterised in that** a rotation lock in the form of an embracing spring is provided on the emergency actuating mechanism (2).

20. A parking brake system according to Claim 19 with a shaft, using which the vehicle user can bring a rotary motion to bear on the gear wheel drive of the emergency actuating mechanism,
**characterised in that** the shaft (53) is divided into two sections (50, 51) which engage in each other with a positive engagement and thereby can be rotated against each other to a limited extent, whereby the embracing spring (52) is controlled via the limited ability to rotate of the sections (50, 51).

21. A parking brake system according to Claim 19 and/or Claim 20,
**characterised in that** the embracing spring (52) is arranged close to the gear wheel drive (12) of the emergency actuating mechanism (2).

22. A parking brake system according to one of the foregoing Claims, with a power transmission arrangement between the worm gear spindle and the parking brakes, which transmits the adjustment movement of the worm gear spindle onto the parking brakes,
**characterised in that** the power transmission arrangement includes a cross arm, which is arranged to move with a reciprocating motion on the worm gear spindle (3) and accepts two control cables (151) leading to the parking brakes.

23. A parking brake system according to Claim 19,
**characterised in that** the cross arm (150) is connected to the worm gear spindle (3) by a bolt (153) with a ball-shaped head (154).

24. A parking brake system according to Claim 22 and/or Claim 23,
**characterised in that** a device is provided for the automatic threading of the control cables (151) into the cross arm (150).

25. A parking brake system according to one of the foregoing Claims,
**characterised in that** in the region of the control arrangement, in which the external power and the emergency actuating mechanisms (1 and 2) are aggregated, a return device (170) is provided for the equalisation of friction and setting phenomena in the parking brake system.

26. A parking brake system according to Claim 25, whereby the spindle is constructed as a hollow shaft, through whose inside a rod is passed for the transmission of the braking power,
**characterised in that**
- the return device (170) includes a runner (173) which together with the spindle (3) is movable along its longitudinal axis,
- the runner (173) has a toothed element (175) which works together with the rod (43) by means of a releasable toothed member (176), whereby the toothed element (175) is out of engagement with the rod (43) when the parking brakes are released and
- a spring element (172) supported against the bodywork of the vehicle exerts an effective pre-tension against the return power of the parking brakes.

27. A parking brake system according to Claim 26,
**characterised in that** run-in inclines (190) or similar are provided, which facilitate the self threading introduction of the rod (43) into the control arrangement.

## Revendications

1. Système de frein de stationnement pour un véhicule, comprenant une installation de manoeuvre à force extérieure (3) qui entraîne une broche filetée (3) par l'intermédiaire d'une unité d'actionnement, cette broche agissant sur le frein de stationnement, ainsi qu'une installation d'actionnement de secours (2) pour actionner le frein de stationnement par la force musculaire en cas de défaillance de l'installation d'actionnement par une force extérieure,
**caractérisé en ce qu'**
à la fois l'installation d'actionnement par une force extérieure et celle d'actionnement de secours (1, 2) comportent une transmission à pignons dentés (5, 12) pour commander la broche filetée (3).

2. Système de frein de stationnement selon la revendication 1,
**caractérisé en ce que**
la transmission à pignons dentés (12) entraîne l'installation d'actionnement de secours (2) à partir d'une vis (13) actionnée par la force musculaire et d'une roue à vis (14) coopérant avec la vis (13) et celle-ci entraîne la broche filetée (3).

3. Système de frein de stationnement selon l'une quelconque des revendications 1 et/ou 2,
**caractérisé en ce que**
la transmission à pignons dentés (5) de l'installation d'actionnement par une force extérieure (1) est constituée par une vis (6) entraînée par l'unité d'actionnement ainsi que par une roue à vis (8) coopérant avec la vis (6), cette roue entraînant de son côté la broche filetée (3) par l'intermédiaire d'un filetage intérieur (9).

4. Système de frein de stationnement selon l'une quelconque des revendications 1 et/ou 3,
**caractérisé en ce que**
la transmission à pignons dentés (12) de l'installation d'actionnement de secours (2) comprend une roue à vis (30) entraînée par la force musculaire et un pignon denté (31) à denture droite coopérant avec la roue à vis (30), ce pignon à denture droite entraînant à son tour la broche filetée (3).

5. Système de frein de stationnement selon l'une quelconque des revendications précédentes,
**caractérisé en ce que**
la broche filetée (3) est bloquée en rotation lors de l'actionnement par la force extérieure.

6. Système de frein de stationnement selon la revendication 5,
**caractérisé en ce que**
l'appui solidaire en rotation de la broche filetée (3) se fait par la transmission à roue dentée (12) autoblocante de l'installation d'actionnement de secours (2).

7. Système de frein de stationnement selon l'une quelconque des revendications 1 à 3, 5 ou 6,
**caractérisé en ce que**
la broche filetée (3) comporte une rainure longitudinale (15) ou une partie aplatie dans laquelle pénètre la roue dentée (14) de l'installation d'actionnement de secours (2) de manière solidaire en rotation et coulissante axialement.

8. Système de frein de stationnement selon l'une quelconque des revendications précédentes,
**caractérisé en ce que**
la roue dentée (14) de l'installation d'actionnement par une force extérieure (1) est bloquée en rotation par l'intermédiaire de l'installation d'actionnement de secours (2) lors de l'entraînement de la broche filetée (3).

9. Système de frein de stationnement selon la revendication 8,
**caractérisé en ce que**
la rotation de la roue dentée (14) est bloquée par la transmission à roue dentée (5) autoblocante de l'installation d'actionnement par une force extérieure (1).

10. Système de frein de stationnement selon l'une quelconque des revendications précédentes, comportant une installation de transmission de force entre la broche filetée et le frein de stationnement qui transmet le mouvement d'actionnement de la broche filetée au frein de stationnement,
**caractérisé par**
une installation de palier (18) entre la broche filetée (3) et l'installation de transmission de force (19), cette installation (18) assurant le découplage du mouvement de rotation de la broche filetée (3) par rapport à son mouvement axial (16).

11. Système de frein de stationnement selon l'une quelconque des revendications précédentes,
**caractérisé en ce que**
la broche (3) est un arbre creux (41) dont l'intérieur (42) est traversé par au moins un élément (43) de l'installation de transmission de force (19).

12. Système de frein de stationnement selon l'une quelconque des revendications précédentes,
**caractérisé par**
un élément de manoeuvre (50, 70, 80, 90) par lequel l'utilisateur du véhicule peut exercer un mouvement de rotation sur un arbre (52, 73, 83, 96) prévu entre l'élément de manoeuvre (50, 70, 80, 90) et la transmission à pignons dentés (12) de l'installation d'actionnement de secours (2).

13. Système de frein de stationnement selon l'une quelconque des revendications précédentes,
**caractérisé en ce que**
l'installation d'actionnement de secours (2) comporte un élément de manoeuvre qui est déplacé dans sa position de non utilisation (E) dans une découpe (61) d'un élément (57) de l'équipement intérieur du véhicule.

14. Système de frein de stationnement selon l'une quelconque des revendications 12 et/ou 13,
**caractérisé en ce que**
l'arbre (52) est télescopique.

15. Système de frein de stationnement selon l'une quelconque des revendications 12 à 14,
**caractérisé en ce que**
l'arbre (73) a un segment d'extrémité (72) tourné vers l'élément de manoeuvre (70), recourbé pour former un bras de levier (d) et l'élément de manoeuvre (70) est formé par une poignée (71) alignée, reliée dans sa zone d'extrémité, de manière articulée, avec le segment d'extrémité recourbé (72) de l'arbre (73) de façon que l'élément de manoeuvre (70)
- prenne une première position (E) transversalement à l'axe longitudinal (76) de l'arbre (73) avec un segment d'extrémité (72) recourbé, pour une liaison par la forme et
- une seconde position (A), libre en rotation, parallèle à l'axe longitudinal (76) de l'arbre (73).

16. Système de frein de stationnement selon l'une quelconque des revendications 12 à 14,
**caractérisé en ce que**
l'élément de manoeuvre (90) est une poignée sensiblement en forme de T qui comporte à une distance (d), et parallèlement à l'axe longitudinal (95) de l'arbre (96), un bouton (92) monté à rotation, et qui peut s'extraire pour former une manivelle.

17. Système de frein de stationnement selon l'une quelconque des revendications 12 à 14,
**caractérisé en ce que**
l'arbre (83) possède, au niveau de son segment d'extrémité tourné vers l'utilisateur, deux articulations (81, 82) qui permettent de replier sensiblement suivant une forme de Z, les deux segments (85, 86) réalisés par les articulations (81, 82) pour que l'arbre (83) constitue un segment de manivelle avec un bras de levier (d).

18. Système de frein de stationnement selon l'une quelconque des revendications précédentes,
**caractérisé en ce que**
le mouvement de rotation de la broche filetée (3) entraînée par une force extérieure est bloqué par la fixation par une liaison de forme de l'élément de manoeuvre (50) de l'installation d'actionnement de secours (2).

19. Système de frein de stationnement selon l'une quelconque des revendications précédentes,
**caractérisé en ce que**
l'installation d'actionnement de secours (2) comporte un moyen de blocage en rotation sous la forme d'un ressort enveloppe (52).

20. Système de frein de stationnement selon la revendication 19, comprenant un arbre par lequel l'utilisateur du véhicule peut appliquer un mouvement de rotation à la transmission à pignon denté de l'installation d'actionnement de secours,
**caractérisé en ce que**
l'arbre (53) est subdivisé en deux segments (50, 51) qui s'interpénètrent par une liaison de forme et peuvent ainsi tourner l'un par rapport à l'autre de manière limitée, le ressort enveloppe 52 étant commandé par la possibilité de rotation limitée des segments (50, 51).

21. Système de frein de stationnement selon l'une quelconque des revendications 19 et/ou 20,
**caractérisé en ce que**
le ressort enveloppe (52) est prévu à proximité de la transmission à pignons dentés (12) de l'installation d'actionnement de secours (2).

22. Système de frein de stationnement selon l'une quelconque des revendications précédentes, comportant une installation de transmission de force entre la broche filetée et le frein de stationnement qui transmet le mouvement d'actionnement de la broche filetée au frein de stationnement,
**caractérisé en ce que**
l'installation de transmission de force comprend un balai (150) prévu de manière basculante sur la broche filetée (3) et reçoit deux câbles (151) reliés aux freins de stationnement.

23. Frein de stationnement selon la revendication 22,
**caractérisé en ce que**
la bascule (150) est accrochée par un goujon (153) à la tête sphérique (154) sur la broche filetée (3).

24. Frein de stationnement selon l'une quelconque des revendications 22 et/ou 23,
**caractérisé par**
une installation pour l'enfilage automatique des câbles (51) dans le balai (150).

25. Frein de stationnement selon l'une quelconque des revendications précédentes,
**caractérisé en ce que**
dans la zone de l'installation de commande, qui regroupe l'installation d'actionnement par une force extérieure et l'installation d'actionnement de secours (1, 2), il est prévu une installation de réglage (170) pour compenser les phénomènes d'usure et de décomposition dans l'installation de freins de stationnement.

26. Frein de stationnement selon la revendication 25,
dont la broche est un arbre creux traversé intérieurement par une tige pour transmettre la force de stationnement,
**caractérisé en ce que**
- l'installation de compensation (170) comprend un chariot (173) qui peut coulisser suivant son axe longitudinal avec la broche (3),
- le chariot (173) comporte un segment denté (175) coopérant par une denture relevable (176) avec la tige (43),
l'élément denté (175) étant hors de prise de la tige (43) lorsque le frein de stationnement est ouvert et
- un élément de ressort (172), qui s'appuie par rapport à la carrosserie du véhicule, exerce sur la tige (43) une précontrainte agissant dans la direction opposée à la force de rappel du frein de stationnement.

27. Frein de stationnement selon la revendication 26,
**caractérisé en ce que**
les rampes d'attaque (190) existent ou sont au moins prévues pour permettre une introduction à enfilage automatique de la tige (43) dans l'installation de commande.
